# EUROPEAN PATENT APPLICATION

(11) **EP 3 330 239 A1**
(43) Date of publication of application: **06.06.2018**
(21) Application number: 16202144.8
(22) Date of filing: 05.12.2016
(51) Int. Cl.: C04B 41/89, F01D 5/28

(54) **INTERMEDIATE BOND-COAT LAYER FOR IMPROVEMENT OF ADHERENCE OF A THERMAL BARRIER COATING ON A CERAMIC MATRIX COMPOSITE SUBSTRATE**

(71) Applicant: Siemens Aktiengesellschaft, 80333 München (DE)
(72) Inventor: Hollingsworth, Peter Stuart, 10589 Berlin (DE); Sadovoy, Alexandr, 14059 Berlin (DE)

(57) **Abstract**

Intermediate bond-coat layer for improvement of adherence of a thermal barrier coating on a ceramic matrix composite substrate

By application of aluminum or aluminum alloy (7') in an intermediate step a good ceramic coating (7) in an adherence of a ceramic coating on a CMC substrate (4) is achieved.

## Description

The invention relates to the bonding of a ceramic coating on a ceramic matrix composite (CMC) by using an appropriate bond-coat and a component.

Ceramic Matrix Composites (CMC) are composed of several layers (plies). These plies consist of ceramic matrix material and ceramic fibers. The CMC material requires an additional coating for the thermal and environmental protection. This coating comprises a ceramic thermal barrier (TBC) and/or environmental barrier (EBC) coating layers. These coating layers are typically deposited with atmospheric plasma spray process (APS). The bonding between the substrate and the sprayed coating is predominantly achieved by the mechanical interlocking of the coating material with rough substrate material.
The weak point of substrate-coating system is the adhesion strength of the coating at the interface with the substrate. Due to low adhesion the coating delaminates from the substrate at high thermomechanical load during the service operation.

Currently, the way to improve the adhesion of the coating is to increase of the substrate roughness pretreatment with grit blasting. From the other hand the ability to increase roughness of the ceramic material providing needed roughness level is very limited. Additionally due to the grit blasting the fibers inside the CMC can be damaged or destroyed.

It is therefore aim of the invention to solve the problems listed above.

The problem is solved by a method according to claim 1 and a component according to claim 2.

In this invention a method to increase the bonding strength of the TBC on a CMC substrate is proposed by application of an intermediate layer. This layer represents a thin layer of a pure aluminum or its alloy which is deposited onto the CMC surface by thermal spray, gas phase, slurry deposition processes or any other suitable method.

The TBC coating is deposited on top. An incorporation of the TBC coating material particles into the aluminum alloy can be achieved during the coating spraying. After the deposition of the coating layers the CMC substrate with the coating should be thermally treated in air in order to oxidize and aluminum alloy. As a result of oxidation the metallic layer will convert to corresponding oxide, for example predominantly Al₂O₃. As a result of oxidation the outwards growth of the oxide into the direction of the CMC substrate and coating material will lead to increased not only mechanical but also chemical bonding of these materials to the intermediate oxide layer.

Innovative solution of the problem with low interface strength of the coating material needed for CMC protection at high temperature.

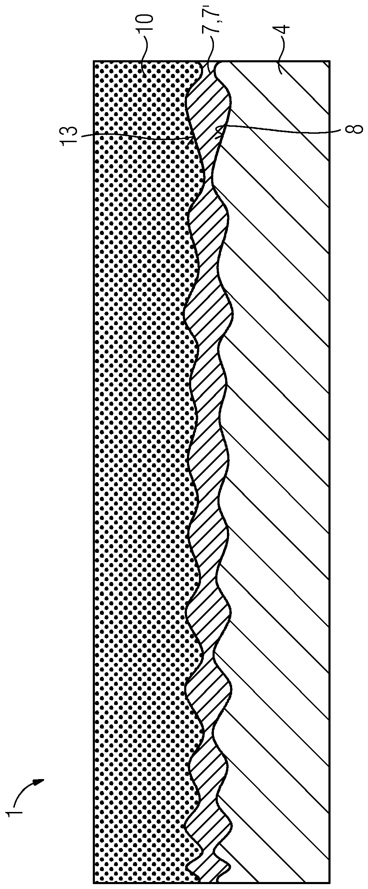

The figure shows schematically a cross section of a CMC substrate with a coating system.

The figure shows a CMC substrate 4 any kind known in the state of the art.

The CMC substrate 4 is a CMC composite in any composition (SiC-SiC, Ox-Ox), preferably Al₂O₃ as matrix material and with fibers, SiC-SiC preferably Al₂O₃ or Al₂O₃/mullite.

But a ceramic coating 10 for oxidation and corrosion and erosion protection is necessary.
Therefore in a first step a thin layer 7' of Aluminum (Al) or aluminum alloy is applied on the CMC substrate 4.

For the application of Aluminum (Al) or Aluminum alloy any coating method known at the state of the art can be used.

Optionally the layer 7' of Aluminum (Al) or Aluminum alloy is at least partially oxidized.

Then the ceramic coating 10 (TBC) is applied.

The material of the ceramic coating 10 can be any known state of the art, which does not have a too big thermal mismatch to alumina, especially a zirconia or a pyrochlore based ceramic.

Even during coating with the ceramic coating 10 a TGO (Thermal Grown Oxide) layer is built up onto the layer 7' of the Aluminum (Al) or aluminum alloy.

During use of the component 1 with the CMC substrate 4 or due to a separate oxidation step before first use or after coating of the TBC, the Aluminum (Al) transfers to alumina or another oxide and a ceramic bond coat is achieved.

## Claims

1. Method
for producing an bond coat (7) for a ceramic coating (10) on a CMC substrate (4):
providing a CMC substrate (4),
applying a layer (7') of Aluminum (Al) or of Aluminum alloy on the surface (8) of the CMC substrate (4),
optionally at least partially oxidizing the layers (7') of Aluminum (Al) or aluminum alloy to alumina,
applying a ceramic coating (10) onto the layer (7') of Aluminum (Al) or aluminum alloy and/or alumina,
optionally during applying the ceramic coating (10) oxidizing the Aluminum (Al) or the aluminum alloy under the ceramic coating (10),
finally heat treating the CMC substrate (4) with the ceramic coating (10) to oxidize at least partially the layer (7') of aluminum (Al) or aluminum alloy ,
especially the residual Aluminum (Al) or aluminum alloy.

2. Component,
especially produced by a method according to claim 1, which comprises at least:
a CMC substrate (4),
a layer (7') of Aluminum (Al) or Aluminum alloy or
an oxide layer (7) which is grown out of the layer (7') of Aluminum (Al) or aluminum alloy,
at least one ceramic coating (10),
which has a preferably different composition than the oxide of the oxide layer (7),
which acts as bond coat.

3. Method or component according to claim 1 or 2,
wherein the CMC substrate (4) comprises an alumina matrix and especially fibers made of mullite, aluminum or mixtures of it.
